# EUROPEAN PATENT SPECIFICATION

(11) **EP 4 399 022 B1**
(45) Date of publication and mention of the grant of the patent: **13.05.2026**
(21) Application number: 22783293.8
(22) Date of filing: 09.09.2022
(51) Int. Cl.: B01J 20/22, B01J 20/28, G01N 1/36, B01J 20/02

(54) **EMBEDDED PRODUCT FOR THE TRANSPORTATION, STORAGE AND/OR HANDLING OF LANTHANIDES OR ACTINIDES AND METHOD OF MANUFACTURING**
EINGEBETTETES PRODUKT ZUM TRANSPORT, ZUR LAGERUNG UND/ODER HANDHABUNG VON LANTHANIDEN ODER ACTINIDEN SOWIE HERSTELLUNGSVERFAHREN
PRODUIT INTÉGRÉ POUR LE TRANSPORT, LE STOCKAGE ET/OU LA MANIPULATION DES LANTHANIDES ET ACTINIDES ET SON PROCÉDÉ DE FABRICATION

(30) Priority: 10.09.2021 EP 21196057
(43) Date of publication of application: 17.07.2024
(73) Proprietor: The European Atomic Energy Community (EURATOM), represented by the European Commission, 1049 Brussels (BE)
(72) Inventor: TÓTH, Kálmán, 2400 Mol (BE); BUJÁK, Renáta, 2440 Geel (BE); EXARCHOU, Vasiliki, 2440 Geel (BE); CARLOS MARQUEZ, Ramon, 76356 Weingarten (DE); AREGBE, Yetunde, 2440 Geel (BE)
(74) Representative: De Tullio, Michele Elio
(86) International application number: PCT/EP2022/075078
(87) International publication number: WO 2023/036917

(56) References cited:
- WO-A2-2009/078037
- US-A1- 2010 035 830
- TOTH KALMAN ET AL: "Research on long-term stability of mixed U and Pu large-sized dried (LSD) spikes for fissile material control", vol. 5, November 2018 (2018-11-01), pages 48 - 51, XP055893544, ISSN: 2185-4823, Retrieved from the Internet <URL:https://www.aesj.net/document/pnst005/data/048_051.pdf> DOI: 10.15669/pnst.5.48

## Description

### FIELD OF THE INVENTION

The present invention relates to an embedded product suitable for the transportation, storage and/or handling of lanthanides, or actinides, or a compound thereof. The present invention further relates to a method of manufacturing of said embedded product, and to a method for the determination of an analyte in a sample, wherein the sample is spiked with the embedded product.

### BACKGROUND OF THE INVENTION

Radionuclides and heavy metals or compounds thereof, such as lanthanides, or actinides, or compounds thereof are essentials elements of industry and are extensively used for domestic and technological applications. Their known toxicity nevertheless poses the risk of environmental contamination, and has raised both ecological and global public health concerns. The release of such elements and their use is therefore strongly regulated. To this end, field samples are routinely collected and the presence of such elements is controlled, in particular by quantitative analyses. Such control is typically carried out off-site and may be performed by safety agencies for regulatory purposes.

The preservation of said field samples during transportation and storage are therefore of the utmost importance to ensure reliable controls. Furthermore, measures have to be taken for the handling of such elements.

This is particularly the case when quantitative analysis is undertaken. Indeed, the quantitative analysis requires stringent procedures in order to determine with high accuracy the unknown composition of samples, especially when the elements to analyze are in traces amounts, as it is generally the case with radionuclides and heavy metals. To this end, measurement laboratories need to implement essential quality controls measures and validated methods. Such quality control measures requires the use of reference materials or certified reference materials, as instrument calibration means or as spikes. Such reference materials or certified reference materials provide a benchmark for measurement laboratories to deliver accurate and comparable results. Reference materials are referred as materials being sufficiently homogeneous and stable with respect to one or more specified properties. According to the International vocabulary of metrology - Basic and general concepts and associated terms (VIM) JCGM 200:2012, certified reference materials are reference materials in the sense that one or more of those properties are characterized by a metrologically valid procedure. They are accompanied with a certificate stating the value of the specified property with its associated uncertainty and a statement of metrological traceability. Reference and certified reference materials have properties that have been established to be fit for their intended use in measurement. Certified reference measurements are a metrological tool for accurate measurements.

In general, references materials are manufactured at dedicated sites, which are different from the sites where these materials are analyzed. Therefore, it is also required that these reference materials are preserved during transportation, storage and handling in order to carry out accurate quantitative analyses.

Means to transport, store and handle reference materials are known in the art.

It is for example known to use a medium for the storage of metallic particles such as notably described by R. Middendorp et AI. (ESARDA Bulletin n° 54, June 2017, p. 25-30). This article discloses that uranium micro particles are suspended into ethanol with the aim to simplify the handling and the storage of said particles. The disadvantage of such ethanol suspensions is their stability over a longer period of time since they are only stable over a period of a few months. Long term stability is important in view of the uprising demand of the market and the scarcity of high purity of metals.

It is also known in the art to embed uranium and/or plutonium in polysaccharides having a high degree of polymerization, i.e. large-size polysaccharide-based matrices, such as notably described by R. Jakopič *et al.* and K.Toth *et al..* Jakopi č*et al.* describes the use of polysaccharide-based matrices such as cellulose acetate butyrate (CAB) with a number average molecular weight Mₙ of 70000 (*Preparation and certification of Large-Sized Dried (LSD) spike IRMM-1027o, EUR 25857 EN, 2013),* or, alternatively, cellulose acetate butyrate/dioctyl phthalate (CAB/DOP) or carboxymethyl cellulose (CMC) (*Preparation and certification of Large-Sized Dried (LSD) spike IRMM-1027t, EUR 29742 EN, 2019*) to embed uranyl nitrate and plutonium nitrate with the aim to provide Large-Sized Dried Spikes, in which said uranium and/or plutonium can be preserved during storage and transport. Similarly, K. Toth *et al.* describes the use of CAB or CMC in the preparation of LSD spike made of uranyl nitrate and plutonium nitrate (K. Toth, Progress in Nuclear Science and Technology, Volume 5, 2018, pp.48-51). However, the manufacturing process of said Large-Sized Dried Spikes is tedious and long, including notably time consuming heating/drying steps. Moreover, the production steps of such Large-Sized Dried Spikes is found to be very sensitive to laboratory conditions, such as humidity, heating/drying temperature and time, which inevitably affects its reproducibility. Therefore, the production capacity of such LSD spikes is limited.

There is thus a need to provide embedded products of lanthanides, or actinides, or compounds thereof, which are suitable for the transportation, storage and/or handling of said lanthanides, or actinides, and compounds thereof, wherein said embedded products possess a long term stability, while their manufacturing process is time-effective and highly reproducible.

### SUMMARY OF THE INVENTION

The inventors have now surprisingly found that it is possible to provide an improved embedded product fulfilling the above mentioned needs and overcoming the above mentioned disadvantages.

It is thus an object of the present invention to provide an embedded product suitable for the transportation, storage and/or handling of lanthanides, or actinides, or compounds thereof, wherein the embedded product, relative to the total weight of the embedded product, comprises:
- at least 60.0 percent by weight (wt.%) of a matrix material (MA) wherein said matrix material (MA), relative to the total weight of the matrix material (MA), comprises more than 55.0 wt.% of at least one saccharide selected from the group consisting of a mono-, di-, tri-, and tetra-saccharide [hereinafter saccharide (S)], and
- at least one lanthanide, or actinide, or a compound thereof,
wherein the molar ratio of the saccharide (S) to the at least one lanthanide, or actinide, or a compound thereof in the embedded product is greater than 1.5.

In another aspect, the present invention provides a method for the manufacturing of the embedded product, as detailed above.

In another aspect, the present invention provides a method for the determination of the concentration of at least one analyte in a sample (SA), wherein said sample (SA) is spiked with the embedded product, as detailed above.

In another aspect, the present invention provides the use of the embedded product, as detailed above, in the method for the determination of the concentration of an analyte in a sample (SA), as detailed above.

### DETAILED DESCRIPTION OF THE INVENTION

Within the context of the present invention, the term "comprising" should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present invention, the only relevant components of the composition are A and B. Accordingly, the terms "comprising" and "including" encompass the more restrictive terms "consisting essentially of" and "consisting of".

The inventors have surprisingly found that by providing an embedded material comprising a matrix material (MA), said matrix material (MA) comprises more than 55 wt.% of at least one saccharide selected from the group consisting of a mono-, di-, tri-, and tetra-saccharide [hereinafter saccharide (S)], relative to the total weight of the matrix material (MA), the embedded material shows excellent stability. In other words, the embedded material thereby obtained does not show sign of flaking, or cracking over time. Consequently, the embedded material may be transported and handled in a safe way, by efficiently embedding the at least one lanthanide, or actinide, or a compound thereof, and thereby avoiding their leaching. Furthermore, the embedded material may be stored for an increased amount of time, thereby providing a reliable source of the at least one lanthanide, or actinide, or a compound thereof.

Furthermore, the Inventors have surprisingly found that the embedded product of the present invention shows excellent homogeneity. Consequently, when the embedded material is used in quantitative analysis, for example as a sample to be analyzed, as a calibration mean, or as a spike, the undesirable bias and uncertainty of the quantitative analysis measurements can be effectively diminished.

Within the context of the present invention, the expression "homogeneity" or "homogeneous" is intended to refer to the at least one lanthanide, or actinide, or a compound thereof being uniformly distributed in the matrix material (MA). In other words, an homogeneous embedded product does not show agglomerates of the at least one lanthanide, or actinide, or a compound thereof.

Without being bound to this theory, it appears that the saccharide (S) according to the present invention acts as embedding agent, and allows the lanthanide, or the actinide, or a compound thereof, to strongly interact with said saccharide (S). As a consequence, the embedding of the lanthanide, or the actinide, or a compound thereof is greatly favored. This strong interaction is surprising as the skilled in the art would not have been incited to use small molecules such as the saccharide (S) according to the present invention to increase the embedding properties. On the contrary, the skilled in the art would have chosen high degree of polymerization compounds, which, due to their covalently bounded units, provide entropically favored embedding properties. As described in details in the examples below, it is clear that the saccharide (S) has a clear positive impact on the stability and on the homogeneity of the embedded product.

As said, the matrix material (MA) of the embedded product according to the present invention comprises more than 55 wt.% of at least one saccharide selected from the group consisting of a mono-, di-, tri-, and tetra-saccharide [hereinafter saccharide (S)], relative to the total weight of the matrix material (MA).

Within the context of the present invention, the expression "at least one saccharide selected from the group consisting of a mono-, di-, tri-, and tetra-saccharide [hereinafter saccharide (S)]," is intended to denote one saccharide (S) or more than one saccharide (S). Mixtures of saccharide (S) may be used.

In the rest of the text, the expression "saccharide (S)" is understood, for the purposes of the present invention, both in the plural and the singular form.

Within the context of the present invention, the term "saccharide" as used herein, may have the broadest meaning generally known in the art.

The saccharide (S) of the matrix material (MA) comprised in the embedded product may contain one carbohydrate unit or more than one carbohydrate unit, said more than one carbohydrate unit may be identical or independently different from each other. By a way of example, a saccharide containing two carbohydrate units is called disaccharide, a saccharide containing two similar carbohydrate units is called a homodisaccharide and a saccharide containing two dissimilar carbohydrate units is called a heterodisaccharide. The carbohydrate units may be substituted in order to modulate the hydrophilicity of the saccharide (S).

Preferably, the saccharide (S) of the matrix material (MA) comprised in the embedded product, as defined above, is hydrophilic.

The saccharide (S) of the matrix material (MA) comprised in the embedded product, as defined above, may also contain one or more carbohydrate unit containing five or six carbon atoms, which is respectively referred to as pentose and hexose.

Non-limiting examples of pentoses mention may be made of ribose, arabinose, arabulose, lyxose, lyxulose, ribulose, xylose, and xylulose, optionally substituted with at least one halo, C₁₋₆ alkyl or C₁₋₆ alkoxy substituent.

Non-limiting examples of hexoses mention may be made of allose, altrose, fructose, galactose, glucose, gulose, idose, mannose, psicose, sorbose, tagatose, and talose, optionally substituted with at least one halo, C₁₋₆ alkyl or C₁₋₆ alkoxy substituent.

According to a preferred embodiment of the present invention, the saccharide (S) of the matrix material (MA) comprised in the embedded product is selected from the group consisting of monosaccharide and disaccharide.

Preferred monosaccharides are selected from the group consisting of glucose, mannose, fructose, galactose, ribose, arabinose, and xylose, more preferably, the saccharide (S) is selected from the group consisting of glucose, mannose and fructose.

Preferred disaccharides are selected from the group consisting of sucrose, lactose, maltose, trehalose, and cellobiose, more preferably from the group consisting of sucrose, lactose and maltose. Sucrose is especially preferred.

According to a more preferred embodiment of the present invention, the saccharide (S) of the matrix material (MA) comprised in the embedded product is selected from the group consisting of glucose, mannose, fructose and sucrose. Sucrose is especially preferred.

The matrix material (MA) may further comprise at least one additional compound, with the proviso that said at least one additional compound does not interfere with the embedding properties of the saccharide (S), as detailed above, and with the proviso that the amount, expressed in wt.% relative to the total weight of the matrix material (MA), of the at least one additional compound is lower than the amount of the saccharide (S) in the matrix material (MA).

Within the context of the present invention, the expression "at least one additional compound" is intended to denote one additional compound or more than one additional compound. Said additional compound may be used as antioxidant, colorant or as stabilizer.

In the rest of the text, the expression "additional compound" is understood, for the purpose of the present invention, both in the plural and in the singular form, that is to say that the matrix material (MA) in the embedded product according to the present invention further comprises one additional compound or more than one additional compound.

Non-limiting examples of suitable additional compound mention may be made of inert additional compounds, such as silicon dioxide, Butylated hydroxytoluene (BHT), Bisphenol-A-bis(diphenyl phosphate) (BDP) or non-saccharide based additional compounds, such as polyvinyl alcohol (PVA).

According to a preferred embodiment of the present invention, the amount of the saccharide (S) in the matrix material (MA) of the embedded product, relative to the total weight of the matrix material, is equal to or more than 60.0 wt.%, preferably equal to or more than 70.0 wt.%, preferably equal to or more than 80.0 wt.%, more preferably equal to or more than 90.0 wt.%, more preferably equal to or more than 95.0 wt.%, more preferably the matrix material consist essentially of the saccharide (S), as defined above.

Within the context of the present invention, the term "consisting essentially of the saccharide (S)" is to be understood that any additional component different from the saccharide (S) comprised in the matrix material (MA), as defined above, is present in an amount of at most 1.0 wt.%, or at most 0.5 wt.%, or at most 0.1 wt.%, relative to the total weight of the matrix material.

As said, the embedded product of the present invention, relative to the total weight of the embedded product comprises at least 60.0 wt.% of the matrix material (MA).

Preferably, the embedded product of the present invention, relative to the total weight of the embedded product, comprises at least 65.0 wt.%, or at least 70.0 wt.%, or at least 75.0 wt.%, or at least 80.0 wt.% of the matrix material (MA).

It is further understood that the upper limit of the amount of the matrix material (MA), relative to the total weight of embedded product, is not particularly limited but is advantageously equal to or less than 99.0 wt.%, or equal to or less than 97.0 wt.%, or equal to or less than 95.0 wt.% of the matrix material.

The inventors have found that in order for the matrix material (MA), as detailed above, and in particular the saccharide (S), as detailed above, to fulfill its embedding role, it is further required than the molar ratio of the saccharide (S) in the embedded product to the at least one lanthanide, or actinide, or a compound thereof is greater than 1.5, preferably greater than or equal to 1.8, more preferably greater than or equal to 2.0, even more preferably greater than or equal to 4.0.

It is further understood that the upper limit of the molar ratio of the saccharide (S) to the at least one lanthanide, or actinide, or a compound thereof, is not particularly limited but is advantageously lower than 15.0, or lower than 13.0, or lower than 10.0.

Within the context of the present invention, the expression "at least one lanthanide, or actinide or a compound thereof" is intended to denote "one lanthanide or more than one lanthanide; or one actinide or more than one actinide; or one compound thereof or more than one compound thereof". Mixtures of lanthanides, or mixtures of actinides, or mixtures of compounds thereof may be used.

In the rest of the text, the expressions "lanthanide", "actinide", and "compound thereof" are understood, for the purposes of the present invention, both in the plural and the singular form.

The lanthanide, actinide, or a compound thereof, as defined above, may be commercially available and may originate from certified reference materials such as NBL PO CRM 116-A enriched uranium or CETAMA MP2 plutonium reference materials, or may be prepared by using conventional methods known to the skilled in the art, such as by using standard solutions or dissolution of standard metals or their compounds, or may originate from field samples, such as environmental, biological or food field samples.

When the lanthanide, actinide, or a compound thereof, as defined above is commercially available, or is prepared by using conventional methods, the embedded product according to the present invention preferably consist essentially of the matrix material (MA), as detailed above, and the lanthanide, actinide, or a compound thereof.

When the lanthanide, actinide, or a compound thereof originate from field samples, said field samples may be sampled and prepared according to any techniques known to the skilled in the art, such as for example by the technique of taking an environmental swipe sample in nuclear safeguards, such as the one described in *IAEA SAFEGUARDS GLOSSARY 2001, June 2002IAEA*/*NVS*/*3,* or by taking a wipe sample in the context of radiation protection or sampling vegetation, soil or water or clinical samples. It goes without saying that when the at least one lanthanide, or actinide or a compound thereof, as detailed above, originates from field samples, the embedded material may further comprise impurities in an amount lower than 10.0 wt.%, or lower than 1.0 wt.%, or lower than or equal to 0.5 .wt.% relative to the total weight of the embedded product, the nature of said impurities depending on the sampling techniques.

The lanthanide, actinide, or a compound thereof in the embedded material according to the present invention includes all known isotopes of said lanthanide, actinide, or said compound thereof, said isotopes may be radioactive or non-radioactive.

Non-limiting examples of lanthanides mention may be made of lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm) and ytterbium (Yb).

Preferably, the lanthanide is selected from the group consisting of cerium (Ce), samarium (Sm), europium (Eu), gadolinium (Gd), and terbium (Tb).

Non-limiting examples of actinides mention may be made of actinium (Ac), thorium (Th), protactinium (Pa), uranium (U), neptunium (Np), plutonium (Pu), americium (Am), curium (Cm), berkelium (Bk), californium (Cf), einsteinium (Es), fermium (Fm), mendelevium (Md), nobelium (No), and lawrencium (Lr).

Preferably, the actinide is selected from the group consisting of uranium (U) and plutonium (Pu).

The expression "compound of lanthanide, or actinide, as used herein, may have the broadest meaning generally understood in the art in which form such compounds may exist, and may notably include a salt, an oxide, a carbide, a complex thereof, or a mixture thereof, said lanthanide, or actinide in said compound of lanthanide, or actinide may be in any oxidation state known to the skilled in the art.

Advantageously, the counter-ion of said salts are chosen among halide, nitrate, sulfate, carbonate and hydroxide.

Non-limiting examples of said salts mention may be made of cerium nitrate, iron (II) chloride, gadolinium hydroxide, gadolinium chloride, gadolinium sulfate, gadolinium nitrate, americium chloride, americium nitrate, uranium hexafluoride, uranyl nitrate, plutonium nitrate, plutonyl nitrate, uranium sulfate, uranyl sulfate, plutonium sulfate, and plutonyl sulfate.

Most preferred salts thereof are actinide salts such as uranyl nitrate, plutonium nitrate, plutonyl nitrate, uranium sulfate, uranyl sulfate, plutonium sulfate, and plutonyl sulfate. Uranyl nitrate and plutonium nitrate are especially preferred.

Non-limiting examples of said oxides mention may be made of americium oxide, uranium oxide, and plutonium oxide.

Non-limiting examples of said complexes mention may be made of gadolinium chelates, uranocene and cyclooctatetraenes and cyclopentadienes complexes.

Non-limiting examples of said carbide mention may be made of uranium carbide, thorium carbide, plutonium carbide, neodymium carbide, gadolinium carbide and samarium carbide.

### Method for the manufacturing of the embedded product

A method for the manufacturing of the embedded product, as detailed above, is also an aspect of the present invention.

It is further understood that all the definitions, preferences and preferred embodiments hereinabove, also apply for all further embodiments, as described below.

The embedded product of the present invention can be prepared by a variety of methods known in the art. For manufacturing the embedded product, several methods may adequately be used.

In one embodiment of the present invention, the method for the manufacturing of the embedded product, as detailed above, comprises first the step of contacting the matrix material (MA), as detailed above with the at least one lanthanide, or actinide, or a compound thereof, as detailed above.

It is understood that the contacting can be carried out by any method known to the skilled in the art according to general practice.

According to a preferred embodiment of the method for the manufacturing of the embedded product of the present invention, the matrix material (MA) is intimately admixed with the at least one lanthanide, or actinide or a compound thereof.

The intimate admixing may be carried out using traditional mixers and blenders, high density mixers and electric stirrers.

Furthermore, it is understood that any order of intimate admixing of the matrix material (MA) and the at one lanthanide, or actinide, or a compound thereof, as detailed above, is acceptable. It is understood that the skilled person in the art will carry out said intimate admixing according to general practice such as notably using optimal times, speeds, and weight, volume and batch quantities.

If desired, the matrix material (MA), and the at least one at one lanthanide, or actinide or a compound thereof, as detailed above, can be first intimately mixed, as detailed above, thereby forming a first premix, said first premix is then further subjected to an acidification step, and then to a drying step.

The acidification step of the first premix, as detailed above, can be performed in a technically simple and in an environmentally and economically viable manner by using a low amount of acid. Such low amount of acid used during the acidification has the advantage that the drying time may be shortened, while still affording excellent embedded products. Furthermore, it was found that such low amount of acid allows the embedded products to be manufactured in a more reproducible way, by limiting the impact on the laboratory conditions, such as humidity, drying temperature and time.

The inventors have also found that the acidification step of the first premix prior to drying thereof according to the method of the present invention further improves the stability of embedded product. Therefore, the embedded product shows excellent transportation, storage and/or handling of the lanthanide, or actinide, or a compound thereof.

When performed in a glass vial, it was indeed found that the acidification step of the first premix according to the method of the present invention allows the formation of said embedded product in the form of a foam, said foam adheres to the inner wall of said glass vial. The adherence of the embedded product consequently limits the flaking of the embedded material, and favour its transportation.

Besides the improved stability of the embedded product, as detailed above, the embedded product also shows an excellent homogeneity. Without being bound to this theory, it is inferred that the formation of an embedded product in the form of a foam, as detailed above, allows the lanthanide, or actinide, or a compound thereof to uniformly distribute in the matrix material (MA), prior to the drying step of the method of the present invention.

The acidification step according to the method for the manufacturing of the embedded product of the present invention can be carried out by any method or techniques known by the skilled in the art according to general practice such as notably using optimal pH, times, temperature, pressure, volume and batch quantities.

Suitable acidification mention may be made by an acidic solution, such as a solution of hydrochloric acid, and nitric acid.

Preferably, the first premix is acidified by an acidic solution, said acidified first premix thereby obtained has a pH value of between 0.0 and 7.0, more preferably from 0.1 to 5.0, more preferably from 0.5 to 4.0, more preferably from 1.0 to 3.0.

Preferably, the first premix is acidified by a solution of nitric acid. More preferably, the first premix is acidified by a solution of nitric acid, said solution of nitric acid is at a concentration of between 1 M and 8 M.

The drying of the first premix, as detailed above, results in the removal of any residual water present thereby providing an improved embedding of the at one lanthanide, or actinide, or a compound thereof, as detailed above in the matrix material (MA), as detailed above.

It is understood that the drying is advantageously carried out until the embedded product of the present invention, as detailed above, is substantially free of water, that is to say, until the embedded product comprises at most 10.0 wt.%, or at most 5.0 wt.%, or at most 1.0 wt.% of water, relative to the total weight of the embedded product.

The drying can be carried out by any method or techniques known by the skilled in the art according to general practice such as notably using optimal times, temperature, pressure, volume and batch quantities.

Suitable method or technique of drying mention may be made of heat drying under atmospheric pressure, reduced pressure or under pressure (e.g. when drying is performed in a glove box), hot air drying, drying under reduced pressure, infrared drying, freeze-drying, and high humidity drying with the use of high temperature water vapor, and the like. Preferably, heat drying is used.

It is understood that the drying is carried out at a temperature lower than the decomposition temperature of any of the constituents of the embedded product, as detailed above, such as at a temperature from 30°C to 150°C, or from 40°C to 100°C, or from 50°C to 90°C.

Alternatively, the matrix material (MA) and the at least one lanthanide, or actinide, or a compound thereof can be put together in a container, thereby providing a mixture (M), said mixture (M) is then subjected to a heating step.

It is understood that any container known to the skilled in the art may be used in the context of the present invention, such as, for example in a glass vial.

Without being bound to this theory, it is inferred that the step of heating promotes the melting of the matrix material (MA), hence allowing the matrix material (MA) to embed the at least one lanthanide, or actinide, or a compound thereof, in a homogeneous way.

Suitable method or technique of heating mention may be made of dry heating under atmospheric pressure, reduced pressure or under pressure (e.g. when heating is performed in a glove box), hot air heating, infrared drying, and high humidity heating with the use of high temperature water vapor, and the like. Preferably, dry heating under atmospheric pressure, reduced pressure or under pressure is used.

It is understood that the heating is carried out at a temperature lower than the decomposition temperature of any of the constituents of the embedded product, as detailed above, such as at a temperature from 30°C to 150°C, or from 40°C to 100°C, or from 50°C to 90°C.

If desired, prior to the heating step, the mixture (M) is subjected to an acidification step, as detailed above.

Another aspect of the present invention is a method for the determination of the concentration of at least one analyte comprised in a sample [hereinafter sample (SA)], wherein the analyte is selected from the group consisting of at least one lanthanide, or actinide, or a compound thereof, as detailed above, said method comprises spiking the sample (SA) with the embedded material, as detailed above.

It is further understood that all definitions and preferences, as described above, equally apply for all further embodiments, as described below.

Within the context of the present invention, the expression "at least one analyte," is intended to denote one analyte or more than one analyte.

In the rest of the text, the expression "analyte" is understood, for the purposes of the present invention, both in the plural and the singular form.

Within the context of the present invention, the expression "spiking" or "spike" refers to its meaning known in the art. In particular, it is known to the skilled in the art that spiking is being referred to the addition of a known amount or concentration of the analyte comprised in a spiking material to the sample to be analyzed. The spiking thereby allows the analyte to be quantified, through calibration.

In other words, a known amount or concentration of the at least one lanthanide, or actinide, or a compound thereof comprised in the embedded product (*i.e.* the spiking material), is added to the sample (SA), as defined above.

The inventors have found that when the embedded material of the present invention is used to spike the sample (SA) in the method for the determination of the concentration of an analyte in a sample (SA), as detailed above, said embedded material, allows a quantitative and highly accurate determination of the concentration of said analyte in the sample (SA).

Among suitable sample (SA) mention may be made of environmental, biological or food field samples.

Non-limiting examples of environmental field samples mention may be made of field samples originating from environmental swipes, wipes and soil.

Non-limiting examples of biological field samples mention may be made of field samples originating from vegetation.

Non-limiting examples of food field samples mention may be made of field samples originating from industrial areas.

Preferably, the sample (SA) of the method of determination of the concentration of the analyte of the present invention, is selected from the group consisting of environmental field samples originating from environmental swipes, wipes and soil.

According to a preferred embodiment of the method for the determination of the concentration of an analyte in a sample (SA), the lanthanide, or actinide, or a compound thereof is further analyzed by mass spectrometry.

Any mass spectrometry technique for the determination of the concentration of an analyte in a sample (SA), wherein the sample (SA) is spiked, known to those skilled in the art may be used.

Non-limiting examples of mass spectrometry techniques for the determination of the concentration of an analyte in a sample (SA) mention may be made of Isotope Dilution Thermal Ionization Mass Spectrometry (ID-TIMS), Chemical Abrasion Thermal Ionization Mass Spectrometry (CA-TIMS), and Multi-Collector Inductively Coupled Mass Spectrometry (MC-ICP-MS), sector field ICP-MS, or Laser ablation inductively coupled plasma mass spectrometry (LA-ICP-MS).

Preferably, the sample (SA) is analyzed by Isotope Dilution Thermal Ionization Mass Spectrometry (ID-TIMS) or Multi-Collector Inductively Coupled Mass Spectrometry (MC-ICP-MS), more preferably by Isotope Dilution Thermal Ionization Mass Spectrometry (ID-TIMS).

It is understood that the skilled person in the art will carry out said techniques according to general practice such as notably using optimal times, speeds, weights, volume and batch quantities.

The inventors have also found that when the embedded material is used in the method for the determination of the concentration of the analyte in a sample (SA) according to the present invention, said embedded material does not cause undesirable interferences through positive or negative bias.

Furthermore, the inventors have found that the embedded product in the method for the determination of the concentration of the analyte of the present invention complies with requirements as set in international document standards such as the ISO standards ISO 17025:2017 and ISO 17034:2016

Another aspect of the present invention is a use of the embedded product, as detailed above, in the method for the determination of the concentration of an analyte in a sample (SA), as detailed above.

It is further understood that all definitions and preferences, as described above, equally apply for all further embodiments, as described below.

Another aspect of the present invention is the use of the embedded product, as detailed above, as a reference material, in particular as a certified reference material.

It is further understood that all definitions and preferences, as described above, equally apply for all further embodiments, as described below.

### EXAMPLES

The invention will be now described in more details, whose purpose is merely illustrative and are not intended to limit the scope of invention.

### Raw materials:

The following materials were bought commercially and used for the experiments without purification: D-(+)-Sucrose (Merck, Darmstadt, Germany), D-(+)-Glucose (Merck), D-(+)-Mannose (≥99.5%, VWR, Leuven, Belgium), D-(-)-Fructose (Molekula, München, Germany), SiO₂ (VWR), Ce(NO₃)₃.6H₂O (Sigma-Aldrich, Overijse, Belgium).

UO₂(NO₃)₂ was prepared in house by dissolving known amount of certified uranium ingots (EC NRM 101, Geel, Belgium and NBL PO CRM 116-A, Lemont, USA) in around 6M nitric acid (Merck) solution and subsequently evaporating the solvent at 55-60°C.

Pu(NO₃)₄ was prepared in house by dissolving known amount of certified plutonium ingots (CETAMA MP2, CEA Marcoule, France) in around 6M hydrochloric acid solution (Suprapur^{®}, Merck) and subsequently evaporation of the solvent at 55-60°C.

### General procedure for the manufacturing of the embedded product (C) of examples 1-5 and 8 (E1-E5 and E8) and comparative examples CE1-CE3:

Each embedded products of examples 1-5 (E1-E5) and comparative example CE1 were prepared by the intimate admixing of the saccharide (S) as described and listed in Table 1 (in essence and amounts) in a vial containing the lanthanide, or actinide, or a compound thereof, as described and listed in Table 1 (in essence and amounts). A few drops of a 2M solution of HNO₃ was added to each vials. The solution or mixture was heated up to a temperature above room temperature and below the decomposition point of any of the compounds of the embedded product and the solvent was evaporated until the formation of a foam and until no condensation can be seen in the inner wall of the vial.

Each embedded products of example 8 (E8) and comparative examples CE2 and CE3 were prepared by the intimate admixing of the saccharide (S) and the additional compound, as described and listed in Table 2 (in essence and amounts) in a vial containing the lanthanide, or actinide, or a compound thereof, as described and listed in Table 2 (in essence and amounts). A few drops of a 2M solution of HNO₃ was added to each vials. The solution or mixture was heated up to a temperature above room temperature and below the decomposition point of any of the compounds of the embedded product and the solvent was evaporated until the formation of a foam and until no condensation can be seen in the inner wall of the vial.

### Evaluation of the stability and the homogeneity of the embedded product of examples 1-5 and 8 (E1-E5 and E8) and comparative examples CE1 - CE3:

Embedded product according to examples 1 to 5 and example 8 (E1-E5 and E8) and comparative examples 1-3 (CE1-CE3) have been manufactured according to the general procedure.

Examples 1 and 2 (E1-E2) and comparative example 1 (CE1), have been dried inside a glove box, under slight under pressure (~70 mbar), due to the radioactivity of UO₂(NO₃)₂ and Pu(NO₃)₄.

Examples 3-5 and 8 (E3-E5 and E8) and comparative examples 2-3 (CE2-CE3) have been dried under atmospheric pressure.

It is inferred that the difference of pressure at which the embedded product of the embedded product according to examples 1-2 (E1-E2) and comparative example 1 (E1), and examples 3-5 and 8 (E3-E5 and E8) and comparative examples 2-3 (CE2-CE3) does not substantially influence the drying time of said embedded product.

The stability and the homogeneity of each of the embedded product of examples E1-E5 and E8 and comparative examples CE1-CE3 were evaluated.

The stability was evaluated by visual means of the embedded product in the vial over a period of up to 3 years. The absence of flaking of the embedded product and the absence of cracking over time, indicative of an excellent stability of the embedded product is indicated by a "+" sign in Table 1 and 2. On the contrary, the presence of flaking and/or cracking in the embedded product is indicated by a "-" sign in Table 1 and 2.

The homogeneity was also evaluated by visual means of the embedded product in the vial. The uniformity of the structure of the product, its color and potential aggregate formations at the macroscopic level were inspected. The absence of color inconsistencies and/or aggregate formations, indicative of an excellent homogeneity of the embedded product is indicated by a "+" sign in Table 1 and 2. On the contrary, the presence of color inconsistencies and/or aggregate formations in the embedded product is indicated by a "-" sign in Table 1 and 2.

**Table 1**

| | **E1** | **E2** | **E3** | **E4** | **E5** | **CE1** |
|---|---|---|---|---|---|---|
| **COMPOSITION** | | | | | | |
| **Matrix material (MA) (in mg)** | | | | | | |
| **Saccharide (S) (in mg)** | | | | | | |
| Sucrose | 400 | 250 | | | | 70 |
| Glucose | | | 120 | | | |
| Mannose | | | | | 105 | |
| Fructose | | | | 130 | | |

| **Lanthanide, or actinide, or compound thereof (in mg)** | | | | | | |
|---|---|---|---|---|---|---|
| UO₂(NO₃)₂ +PU(NO₃)₄ | 55+2 | 55+2 | | | | 55+2 |
| Ce(NO₃)₃.6H₂O | | | 50 | 50 | 62 | |

| **Percent by weight (wt.%) of a matrix material (MA) relative to the total weight of the embedded product** | | | | | | |
|---|---|---|---|---|---|---|
| | 88 | 81 | 71 | 72 | 63 | 55 |

| **Molar ratio saccharide (S) to lanthanide, or actinide, or compound thereof** | | | | | | |
|---|---|---|---|---|---|---|
| | 8.1 | 5.1 | 5.8 | 6.3 | 4.1 | **1.4** |

| **PROPERTIES** | | | | | | |
|---|---|---|---|---|---|---|
| *Appearance* | Yellow foam | Orange foam | White foam | White foam | N/A | Orange Foam |
| *Stability* | + | + | + | + | + | - |
| *Homogeneity* | + | + | + | + | + | - |

**Table 2**

| | **E8** | **CE2** | **CE3** |
|---|---|---|---|
| **COMPOSITION** | | | |
| **Matrix material (MA) (in mg)** | | | |
| **Saccharide (S) (in mg)** | | | |
| Glucose | 139 | 154 | 143 |

| **Additional compound (in mg)** | | | |
|---|---|---|---|
| SiO₂ | 80 | 582 | 136 |

| **Lanthanide, or actinide or compound thereof (in mg)** | | | |
|---|---|---|---|
| Ce(NO₃)₃.6H₂O | 64 | 58 | 67 |

| **Percent by weight (wt.%) of the saccharide (S) relative to the total weight of the matrix material (MA)** | | | |
|---|---|---|---|
| | 63 | **21** | **51** |

| **Percent by weight (wt.%) of a matrix material (MA) relative to the total weight of the embedded product** | | | |
|---|---|---|---|
| | 77 | 93 | 81 |

| **Molar ratio saccharide (S) to lanthanide, or actinide, or compound thereof** | | | |
|---|---|---|---|
| | 5.23 | 6.40 | 5.14 |

| **PROPERTIES** | | | |
|---|---|---|---|
| *Appearance* | White foam | N/A | White foam |
| *Stability* | + | - | - |
| *Homogeneity* | + | - | - |

The results in Table 1 show that embedded products consisting of sucrose as matrix material (MA), and uranyl nitrate (UO₂(NO₃)₂) and plutonium nitrate (Pu(NO₃)₄) in amounts according to the present invention shows excellent stability over a period of up to 3 years, and excellent homogeneity (Examples E1 and E2).

On the contrary, the embedded product according to comparative example CE1, having a molar ratio sucrose (S) to uranyl nitrate (UO₂(NO₃)₂) and plutonium nitrate (Pu(NO₃)₄) of 1.4, hence out of the claimed range, leads to its flaking within a year, which is indicative of its poor stability. Furthermore, originally orange color of the sample was not uniform, hence indicating an heterogeneous distribution of the embedded product.

The results in Table 1 further show that a large variety of saccharide (S) according to the present invention, namely sucrose, fructose, mannose, and glucose and a large variety of compounds of lanthanides, or actinide, or compounds thereof, may be used without impairing stability and homogeneity of said embedded product.

The results in Table 2 show that when the embedded product consisted of sucrose as saccharide (S), silicon dioxide (SiO₂) as additional compound, and Ce(NO₃)₃.6H₂O, wherein the amount of the saccharide (S) in the matrix material (MA) is within the claimed range (E8) showed excellent stability and homogeneity.

On the contrary, when the amount of the saccharide (S) in the embedded product, relative to the total weight of the matrix material (MA) is out of the claimed range (CE2 : 21 wt.% and CE3 : 51 wt.%), said embedded products showed either imperfect embedding or partial flaking within days, which is indicative of its poor stability. Furthermore the formation of aggregate at macroscopic level was observed.

## Claims

1. An embedded product suitable for the transportation, storage and/or handling of lanthanides, or actinides, or compounds thereof, wherein the embedded product, relative to the total weight of the embedded product, comprises:
- at least 60.0 percent by weight (wt.%) of a matrix material (MA) wherein said matrix material (MA), relative to the total weight of the matrix material (MA), comprises more than 55.0 wt.% of at least one saccharide (S) selected from the group consisting of a mono-, di-, tri-, and tetra-saccharide and
- at least one lanthanide, or actinide, or a compound thereof,
wherein the molar ratio of the saccharide (S) to the at least one lanthanide, or actinide, or a compound thereof in the embedded product is greater than 1.5.

2. The embedded product according to claim 1, wherein the saccharide (S) is selected from the group consisting of monosaccharide and disaccharide, preferably is selected from the group consisting of glucose, mannose, fructose and sucrose, more preferably the saccharide (S) is sucrose.

3. The embedded product according to claim 1 or claim 2, wherein the amount of the saccharide (S), relative to the total weight of the matrix material, is equal to or more than 60.0 wt.%, preferably equal to or more than 70.0 wt.%, preferably equal to or more than 80.0 wt.%, more preferably equal to or more than 90.0 wt.%, more preferably any additional component different from the saccharide (S) comprised in the matrix material (MA) is present in an amount of at most 1.0 wt.% relative to the total weight of the matrix material.

4. The embedded product according to any one of claims 1 to 3, wherein the embedded product comprises, relative to the total weight of the embedded product, at least 65.0 wt.%, or at least 70.0 wt.%, or at least 75.0 wt.%, or at least 80.0 wt.% of the matrix material (MA).

5. The embedded product according to any one of claims 1 to 4, wherein the molar ratio of the saccharide (S) to the at least one lanthanide, or actinide, or a compound thereof in the embedded product is greater than or equal to 1.8, more preferably greater than or equal to 2.0, even more preferably greater than or equal to 4.0.

6. The embedded product according to any one of claims 1 to 5, wherein the embedded product consists essentially of the matrix material (MA) and the at least one lanthanide, actinide, or a compound thereof.

7. The embedded product according to any one of claims 1 to 6, wherein at least one lanthanide is selected from the group consisting of cerium (Ce), samarium (Sm), europium (Eu), gadolinium (Gd), and terbium (Tb), the at least one actinide is selected from the group consisting of uranium (U) and plutonium (Pu), and the at least one compound is selected from the group consisting of uranyl nitrate, plutonium nitrate, plutonyl nitrate, uranium sulfate, uranyl sulfate, plutonium sulfate, and plutonyl sulfate.

8. A method for the manufacturing of the embedded product according to any one of claims 1 to 7, wherein the method comprises a step of contacting the matrix material (MA), with the at least one lanthanide, or actinide, or a compound thereof.

9. The method according to claim 8, wherein the matrix material (MA), and the at least one at one lanthanide, or actinide, or a compound thereof, is intimately mixed, thereby forming a first premix, said first premix is then further subjected to an acidification step, and then to a drying step.

10. The method according to claim 9, wherein the first premix is acidified by a solution of nitric acid, preferably by a solution of nitric acid at a concentration of between 1 M and 8 M.

11. The method according to claim 8, wherein the matrix material (MA) and the at least one lanthanide, or actinide, or a compound thereof are put together in a container, thereby providing a mixture (M), said mixture (M) is then subjected to a heating step.

12. A method for the determination of the concentration of at least one analyte comprised in a sample (SA) wherein the at least one analyte is selected from the group consisting of at least one lanthanide, or actinide, or a compound thereof, said method comprises spiking the sample (SA) with the embedded material according to any one of claims 1 to 7.

13. The method according to claim 12, wherein the sample (SA) is selected from the group consisting of environmental field samples originating from environmental swipes, wipes and soil.

14. The method according to claim 12 or claim 13, wherein the at least one lanthanide, or actinide, or a compound thereof is further analyzed by mass spectrometry.

15. The method according to claim 14, the at least one lanthanide, or actinide, or a compound thereof is analyzed by Isotope Dilution Thermal Ionization Mass Spectrometry (ID-TIMS).

## Patentansprüche

1. Eingebettetes Produkt, geeignet für den Transport, die Lagerung und/oder die Handhabung von Lanthaniden, oder Actiniden, oder deren Verbindungen, wobei das eingebettete Produkt, bezogen auf das Gesamtgewicht des eingebetteten Produkts, umfasst:
- mindestens 60,0 Gew.-% eines Matrixmaterials (MA), wobei dieses Matrixmaterial (MA) , bezogen auf das Gesamtgewicht des Matrixmaterials (MA), mehr als 55,0 Gew.-% mindestens eines Saccharids (S) enthält, das aus der Gruppe bestehend aus Mono-, Di-, Tri- und Tetrasaccharid ausgewählt ist, und
- mindestens ein Lanthanid, oder ein Actinid, oder eine Verbindung davon,
wobei das molare Verhältnis des Saccharids (S) zu dem mindestens einen Lanthanid, oder Actinid, oder einer Verbindung davon im eingebetteten Produkt größer als 1,5 ist.

2. Eingebettetes Produkt nach Anspruch 1, wobei das Saccharid (S) ist ausgewählt aus der Gruppe bestehend aus Monosaccharid und Disaccharid, vorzugsweise aus der Gruppe bestehend aus Glucose, Mannose, Fructose und Saccharose ausgewählt, wobei mehr bevorzugt ist das Saccharid (S) Saccharose.

3. Eingebettetes Produkt nach Anspruch 1 oder Anspruch 2, wobei die Menge des Saccharids (S), bezogen auf das Gesamtgewicht des Matrixmaterials, gleich oder größer als mindestens 60,0 Gew.-%, vorzugsweise gleich oder größer als mindestens 70,0 Gew.-%, vorzugsweise gleich oder größer als mindestens 80,0 Gew.-%, mehr bevorzugt gleich oder größer als mindestens 90,0 Gew.-% ist, wobei mehr bevorzugt jede weitere Komponente, die sich von dem im Matrixmaterial (MA) enthaltenen Saccharid (S) unterscheidet, ist in einer Menge von höchstens 1,0 Gew.-%, bezogen auf das Gesamtgewicht des Matrixmaterials vorhanden.

4. Eingebettetes Produkt nach einem der Ansprüche 1 bis 3, wobei das eingebettete Produkt, bezogen auf das Gesamtgewicht des eingebetteten Produkts, mindestens 65,0 Gew.-%, oder mindestens 70,0 Gew.-%, oder mindestens 75,0 Gew.-%, oder mindestens 80,0 Gew.-% Matrixmaterial (MA) enthält.

5. Eingebettetes Produkt nach einem der Ansprüche 1 bis 4, wobei das Molverhältnis des Saccharids (S) zu mindestens einem Lanthanid, oder einem Actinid, oder einer Verbindung davon im eingebetteten Produkt größer oder gleich 1,8, mehr bevorzugt größer oder gleich 2,0 und noch mehr bevorzugt größer oder gleich 4,0 ist.

6. Eingebettetes Produkt nach einem der Ansprüche 1 bis 5, wobei das eingebettete Produkt im Wesentlichen aus dem Matrixmaterial (MA) und aus mindestens einem Lanthanid, einem Actinid, oder einer Verbindung davon besteht.

7. Eingebettetes Produkt nach einem der Ansprüche 1 bis 6, wobei mindestens ein Lanthanid aus der Gruppe ausgewählt ist, bestehend aus Cer (Ce), Samarium (Sr), Europium (Eu), Gadolin (Gd) und Terbium (Tb), wobei mindestens ein Actinid aus der Gruppe ausgewählt ist, bestehend aus Uran (U) und Plutonium (Pu), und wobei mindestens eine Verbindung aus der Gruppe bestehend aus Uranylnitrat, Plutoniumnitrat, Plutonylnitrat, Uransulfat, Uranylsulfat, Plutoniumsulfat und Plutonylsulfat ausgewählt ist.

8. Verfahren zur Herstellung des eingebetteten Produkts nach einem der Ansprüche 1 bis 7, wobei das Verfahren einen Schritt des In-Kontakt-Bringens des Matrixmaterials (MA) mit dem mindestens einen Lanthanid, oder Actinid, oder einer Verbindung davon umfasst.

9. Verfahren nach Anspruch 8, wobei das Matrixmaterial (MA) und mindestens ein Lanthanid, oder ein Actinid, oder eine Verbindung davon, innig vermischt werden, wodurch eine erste Vormischung entsteht, wobei diese erste Vormischung anschließend einem Ansäuerungsschritt und danach einem Trocknungsschritt unterzogen wird.

10. Verfahren nach Anspruch 9, wobei die erste Vormischung mit einer Salpetersäurelösung, vorzugsweise mit einer Salpetersäurelösung mit einer Konzentration zwischen 1 M und 8 M, angesäuert wird.

11. Verfahren nach Anspruch 8, wobei das Matrixmaterial (MA) und mindestens ein Lanthanid, oder ein Actinid, oder eine Verbindung davon in einem Behälter zusammengegeben werden, wodurch eine Mischung (M) entsteht, wobei diese Mischung (M) anschließend einem Erhitzungsschritt unterzogen wird.

12. Verfahren zur Bestimmung der Konzentration mindestens eines Analyten in einer Probe (SA), wobei der mindestens eine Analyt aus der Gruppe bestehend aus mindestens einem Lanthanid, oder einem Actinid, oder einer Verbindung davon, ausgewählt ist; wobei das Verfahren umfasst das Versetzen der Probe (SA) mit dem eingebetteten Material gemäß einem der Ansprüche 1 bis 7.

13. Verfahren nach Anspruch 12, wobei die Probe (SA) aus der Gruppe bestehend aus Umweltfeldproben, die aus Umweltabstrichen, Wischproben und Bodenproben stammen, ausgewählt ist.

14. Verfahren nach Anspruch 12 oder 13, wobei das mindestens eine Lanthanid, oder Actinid oder eine Verbindung davon zusätzlich mittels Massenspektrometrie analysiert wird.

15. Verfahren nach Anspruch 14, wobei mindestens ein Lanthanid, oder Actinid oder eine Verbindung davon mittels Isotopenverdünnungs-Thermoionisations-Massenspektrometrie (ID-TIMS) analysiert wird.

## Revendications

1. Produit intégré pour le transport, le stockage et/ou la manipulation de lanthanides, ou d'actinides ou de composés de ceux-ci, dans lequel le produit intégré, par rapport au poids total du produit intégré, comprend :
- au moins 60,0 pour cent en poids (% en poids) d'un matériau de matrice (MA), dans lequel ledit matériau de matrice (MA), par rapport au poids total du matériau de matrice (MA), comprend plus de 55,0 % en poids d'au moins un saccharide (S) choisi parmi le groupe constitué d'un mono-, di-, tri- et tétra-saccharide ; et
- au moins un lanthanide, ou un actinide, ou un composé de ceux-ci,
dans lequel le rapport molaire du saccharide (S) par rapport à au moins un lanthanide, ou un actinide, ou un composé de ceux-ci, dans le produit intégré est supérieur à 1,5.

2. Produit intégré selon la revendication 1, dans lequel le saccharide (S) est choisi parmi le groupe constitué de monosaccharide et de disaccharide, de préférence est choisi parmi le groupe constitué de glucose, mannose, fructose et sucrose, plus de préférence le saccharose (S) est du sucrose.

3. Produit intégré selon la revendication 1 ou la revendication 2, dans lequel la quantité du saccharide (S), par rapport au poids total du matériau de matrice, est égale ou supérieure à 60,0 % en poids, de préférence égale ou supérieure à 70,0 % en poids, de préférence égale ou supérieure à 80,0 % en poids, et plus de préférence est égale ou supérieure à 90,0 % en poids, et plus de préférence chaque composant additionnel différent du saccharide (S) compris dans le matériau de matrice (MA) est présent en une quantité d'au moins 1,0 % en poids par rapport au poids total du matériau de matrice.

4. Produit intégré selon l'une quelconque des revendications 1 à 3, dans lequel le produit intégré comprend, par rapport au poids total du produit intégré, au moins 65,0 % en poids, ou au moins 70,0 % en poids, ou au moins 75,0 % en poids, ou au moins 80,0 % en poids du matériau de matrice (MA).

5. Produit intégré selon l'une quelconque des revendications 1 à 4, dans lequel le rapport molaire du saccharide (S) à au moins un lanthanide, ou un actinide, ou un composé de ceux-ci dans le produit intégré est supérieur ou égal à 1,8, plus de préférence est supérieur ou égal à 2,0, et encore plus de préférence est supérieur ou égal à 4,0.

6. Produit intégré selon l'une quelconque des revendications 1 à 5, dans lequel le produit intégré est essentiellement constitué du matériau de matrice (MA) et d'au moins un lanthanide, un actinide ou un composé de ceux-ci.

7. Produit intégré selon l'une quelconque des revendications 1 à 6, dans lequel au moins un lanthanide est choisi parmi le groupe constitué de cérium (Ce), samarium (Sm), europium (Eu), gadolinium (Gd) et terbium (Tb), au moins un actinide étant choisi parmi le groupe constitué d'uranium (U) et de plutonium (Pu), et au moins un composé étant choisi parmi le groupe constitué de nitrate d'uranyle, nitrate de plutonium, nitrate de plutonyle, sulfate d'uranium, sulfate d'uranyle, sulfate de plutonium et sulfate de plutonyle.

8. Procédé de fabrication du produit intégré selon l'une quelconque des revendications 1 à 7, dans lequel le procédé comprend une étape de mise en contact du matériau de matrice (MA) avec au moins un lanthanide ou un actinide, ou un composé de ceux-ci.

9. Procédé selon la revendication 8, dans lequel le matériau de matrice (MA) et au moins un lanthanide ou un actinide, ou un composé de ceux-ci, sont intimement mélangés, formant ainsi un premier pré-mélange, ledit premier pré-mélange étant ensuite soumis à une étape d'acidification, et ensuite à une étape de séchage.

10. Procédé selon la revendication 9, dans lequel le premier pré-mélange est acidifié par une solution d'acide nitrique, de préférence par une solution d'acide nitrique à une concentration comprise entre 1 M et 8 M.

11. Procédé selon la revendication 8, dans lequel le matériau de matrice (MA) et au moins un lanthanide, ou un actinide, ou un composé de ceux-ci, sont placés ensemble dans un récipient, formant ainsi un mélange (M), ledit mélange (M) étant ensuite soumis à une étape de chauffage.

12. Procédé de détermination de la concentration d'au moins un analyte contenu dans un échantillon (SA), dans lequel au moins un analyte est choisi parmi le groupe constitué d'au moins un lanthanide, ou un actinide, ou un composé de ceux-ci, ledit procédé comprenant l'ajout à l'échantillon (SA) du matériau intégré selon l'une quelconque des revendications 1 à 7.

13. Procédé selon la revendication 12, dans lequel l'échantillon (SA) est choisi parmi le groupe constitué d'échantillons de champ environnementaux obtenus de lingettes, essuyages et terre environnementaux.

14. Procédé selon la revendication 12 ou la revendication 13, dans lequel au moins un lanthanide, ou un actinide, ou un composé de ceux-ci, est ensuite analysé par spectrométrie de masse.

15. Procédé selon la revendication 14, dans lequel au moins un lanthanide ou un actinide, ou un composé de ceux-ci, est analysé par spectrométrie de masse à dilution isotopique et ionisation thermique (ID-TIMS).
